Europäisches Patentamt

(19) European Patent Office

Office européen des brevets

(11) Veröffentlichungsnummer: **0 047 044**
**A1**

(12) # EUROPÄISCHE PATENTANMELDUNG

(21) Anmeldenummer: 81200958.7

(22) Anmeldetag: 31.08.81

(51) Int. Cl.³: **C 02 F 3/00**
**C 02 F 3/28, C 02 F 1/58**

(30) Priorität: 03.09.80 CH 6622/80
19.09.80 CH 7016/80
10.10.80 CH 7562/80

(43) Veröffentlichungstag der Anmeldung:
10.03.82 Patentblatt 82/10

(84) Benannte Vertragsstaaten:
AT CH DE FR LI

(71) Anmelder: **Firma Dr.Ing. Hans Müller**
**Alte Landstrasse 415**
**CH-8708 Männedorf(CH)**

(72) Erfinder: **Müller, Hans, Dr. Ing.**
**im Allmendli**
**CH-8703 Erlenbach(CH)**

(74) Vertreter: **Herrmann, Peter**
**Chemap AG Alte Landstrasse 415**
**CH-8708 Männedorf(CH)**

(54) **Verfahren zur Entfärbung von Abwässern.**

(57) In einem Verfahren zur Entfärbung von biologisch abgebautem Abwasser der Fermentationsindustrie, werden nach Verbrennung der vorwiegend $CH_4$, $CO_2$, $H_2S$, $NH_3$—haltigen Abgase aus der anaeroben Abbaustufe einer Abwasseranlage, die schwefeldioxidhaltigen Rauchgase zur Entfärbung oder Bleichung des abgebauten Abwassers verwendet. Eine Alkalischstellung mit Kalkhydrat in Form einer wässrigen Kalkmilchsuspension ermöglicht neben der Neutralisation die Gewinnung von Ammoniak und eine anschliessende Bleichung mit gasförmigem Säureanhydrid in Form von $SO_2$ und $CO_2$. Die Entfärbung mittels $CO_2$ unter Zusatz von $SO_2$ bringt einen wesentlich verstärkten Entfärbungseffekt. Die Verwendung der Rauchgase bewirkt ihrerseits deren Reinigung von $SO_2$ und somit eine indirekte Entfernung des im Abwasser enthaltenen Schwefels. Zur Entfärbung eignen sich neben biologisch abgebauten Schlempen besonders aerob-anaerob abgebaute Fermentations-abwässer der Brauereien, Brennereien, Antibiotikahersteller, Zitronensäurehersteller.

./...

EP 0 047 044 A1

Fig. 3

## Verfahren zur Entfärbung von Abwässern

Die Erfindung betrifft ein Verfahren zur Entfärbung von Abwässern nach der anaeroben Reinigung einer zweistufigen biologischen Abwasseranlage.

Gefärbte Abwässer, die nach einer biologischen Abwasserbehandlung anfallen, können nicht ohne weiteres in die Vorfluter der Flüsse und Seen abgelassen werden. So sind beispielsweise Abwässer aus der Alkoholherstellung aus Melasse, sogenannte Schlempen, nach einer aeroben-anaeroben Behandlung immer noch stark braun gefärbt, selbst wenn die $BSB_5$-Belastung nur noch wenige mg/l beträgt. Mehr oder weniger gefärbte Wässer resultieren auch nach der Behandlung von verschiedenen Abwässern der Fermentationsindustrien.

Hochbelastete Abwässer werden vielfach durch anaerobe Fermentierung abgebaut. Bei diesem Abbau entsteht Methangas, meistens mit $CO_2$ und $H_2S$ vermischt. Das Rohgas kann direkt oder zur Energiegewinnung verbrannt und beispielsweise zur Dampferzeugung verwendet werden. $H_2S$ wird bei der Verbrennung durch Oxidation mit dem Luftsauerstoff in $SO_2$ umgewandelt.

Die eiweisshaltigen Abwässer, beispielsweise von Fermentationsindustrie, Brauereien, Hefefabriken, Brennereien, Zuckerfabriken, Schlachthäusern und Gerbereien, enthalten grosse Mengen von Schwefelverbindungen, welche während der anaeroben Stufe einer Abwasserbehandlung in $H_2S$ umgewandelt werden. Solche Abwässer haben ein COD in der Grössenordnung von 30 - 40'000. Nach dem anaeroben Abbau stellt sich ein COD vom 3 - 4'000 ein.

Beim anaeroben Abbau entstehen aus jedem kg COD ca. 0,3 $m^3$ Methangas. Dieses ist begleitet von $CO_2$ und, je nach dem Schwefelgehalt, einer entsprechenden Menge an $H_2S$. Das Abwasser selbst ist dunkelbraun gefärbt und kann auch durch die anschliessende aerobe Belebtschlammbehandlung nicht aufgehellt werden.

Es sind Verfahren zur Entfernung von $H_2S$ aus Abwässern bekannt, die Eisensalze verwenden. Eisensalze scheiden die Sulfide als schwarzes Eisensulfid ab, welches eine Braun- bis Schwarzfärbung des Abwassers hervorruft und somit keine Entfärbung sondern Farbvertiefung bewirkt.

Aufgabe der Erfindung ist es, ein Verfahren zu schaffen, um stark gefärbtes Abwasser nach der anaeroben Stufe einer Abwasserreinigung zu entfärben.
Eine weitere Aufgabe ist es, stark gefärbtes Abwasser nach der biologischen Klärung neben dem Entfärben gleichzeitig zu neutralisieren und das so gereinigte Abwasser direkt dem Vorfluter zuführen zu können.

Diese Aufgabe wird erfindungsgemäss nach Patentanspruch 1 gelöst und ist dadurch gekennzeichnet, dass das Abwasser mit gasförmigem Säureanhydrid behandelt wird.

Als gasförmiges Säureanhydrid hat sich Schwefeldioxid als besonders geeignet erwiesen. Es wurde gefunden, dass die genannten Abwässer durch eine Behandlung mit $SO_2$ weitgehend entfärbt werden können, wobei mit steigender $SO_2$-Konzentration die Geschwindigkeit der Entfärbung erhöht wird.

Man kann nun die Behandlung mit $SO_2$ so vornehmen, dass mit einem grossen Ueberschuss an $SO_2$ gearbeitet wird, dass anschliessend das überschüssige $SO_2$ aus der Lösung zum Beispiel durch Einblasen von Luft entfernt und wiederum in den Kreislauf zurückgeführt wird. Auf diese Weise wird eine minimale Menge von $SO_2$ für die Entfärbung verbraucht.

Das $SO_2$ kann an Ort und Stelle durch Verbrennung von Schwefel erzeugt werden. Das gebleichte Abwasser kann einer chemischen Nachbehandlung unterworfen werden, zum Beispiel einer Behandlung mit Kalkmilch.

Zum Alkalischstellen hat sich in vorteilhafter Weise die Verwendung von Kalkhydrat $Ca(OH)_2$ in Form einer wässrigen Lösung als Kalkmilch als geeignet erwiesen. Die Zugabe der Kalkmilch erfolgt bis ein pH-Wert von 10-12 erreicht ist. Durch Einleiten von Kohlenstoffdioxid ($CO_2$) in die kalkalkalische Lösung erfolgt eine Mitfällung von Schmutz-

- 4 -

partikeln durch das ausfallende Calciumkarbonat, welches gleichzeitig adsorptive Wirkung hat und so eine rasche Entfärbung bewirkt. Der Entfärbungseffekt kann durch Zugabe geringer Mengen von $SO_2$, Oxalsäure, Zitronensäure und Wasserstoffperoxid verstärkt werden. Die Einleitung der gasförmigen Säureanhydride erfolgt bis zur Neutralisation des Abwassers. Der gebildete Niederschlag aus Kalk und Farbstoffträgern kann durch Zentrifugieren oder Filtrieren abgetrennt werden. Sollte eine einmalige Behandlung bei bestimmten Abwässern nicht zum gewünschten Erfolg führen, kann der Vorgang ein- oder mehrmals wiederholt werden.

Das von der Ausblasung erhaltene überschüssige $SO_2$ kann direkt als Gas dem Prozess wiederum zugeführt werden, oder aber es wird in einer speziellen Stripping-Kolonne in Wasser aufgefangen und so in den Prozess als wässrige Lösung zurückgeführt.

Die schwefeldioxidhaltigen Rauchgase werden durch Verbrennen einer äquivalenten Menge $H_2S$-haltiger Faulgase erzeugt. Die bei der Verbrennung erzeugte Wärme wird zur Dampferzeugung verwendet, und die entstehenden Rauchgase werden durch das Abwasser geblasen. Das Abwasser wird bis zur hellgelben Farbe aufgehellt und das $SO_2$ gleichzeitig teilweise aus den Rauchgasen entfernt.

Das erfindungsgemässe Verfahren soll anhand von Zeichnungen beschrieben werden.

Es zeigen:

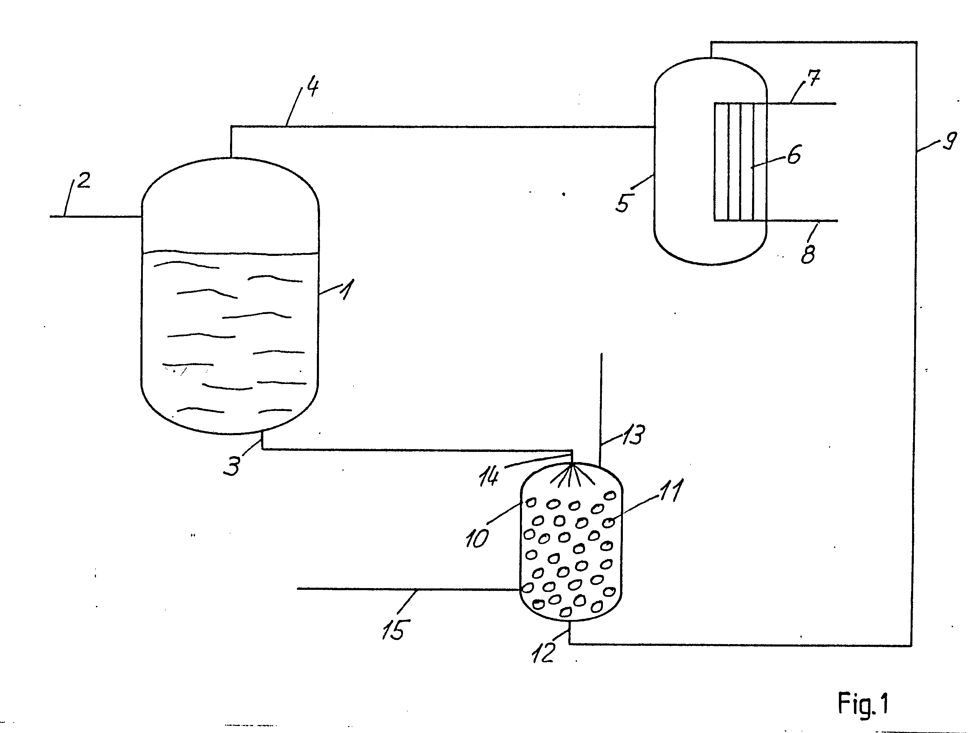

Fig. 1 ein Fliessbild des erfindungsgemässen Verfahrens,
Fig. 2 eine Bleichung mit $SO_2$-Rückführung,
Fig. 3 eine Variante der Anordnung von Fig. 2,
Fig. 4 eine weitere Variante zur Bleichung mit $SO_2$-
Rückführung.

In einem Faulbehälter 1 mit einer Abwasserzuleitung 2, einer Abwasserableitung 3 wird das im Kopf des Behälters 1 entstehende Abgas über eine Leitung 4 einer Verbrennungsvorrichtung 5 zugeführt. Im Verbrennungsofen 5 ist ein mit einem Wärmeträger versehener Wärmeaustauscher 6 mit einer Zuleitung 7 und einer Ableitung 8 installiert. Die entstehenden Rauchgase werden über eine Leitung 9 einem Bleichturm 10, der als Waschkolonne fungiert, zugeführt. Diese Waschkolonne kann mit Füllkörpern 11 befüllt sein und weist einen Zugang 12 für die Rauchgase, einen Abgang 13 für die gereinigten Gase sowie Zugang 14 für das zu entfärbende Abwasser und einen Abgang 15 für das entfärbte Abwasser auf. Im Betrieb erfolgt die Entfärbung kontinuierlich.

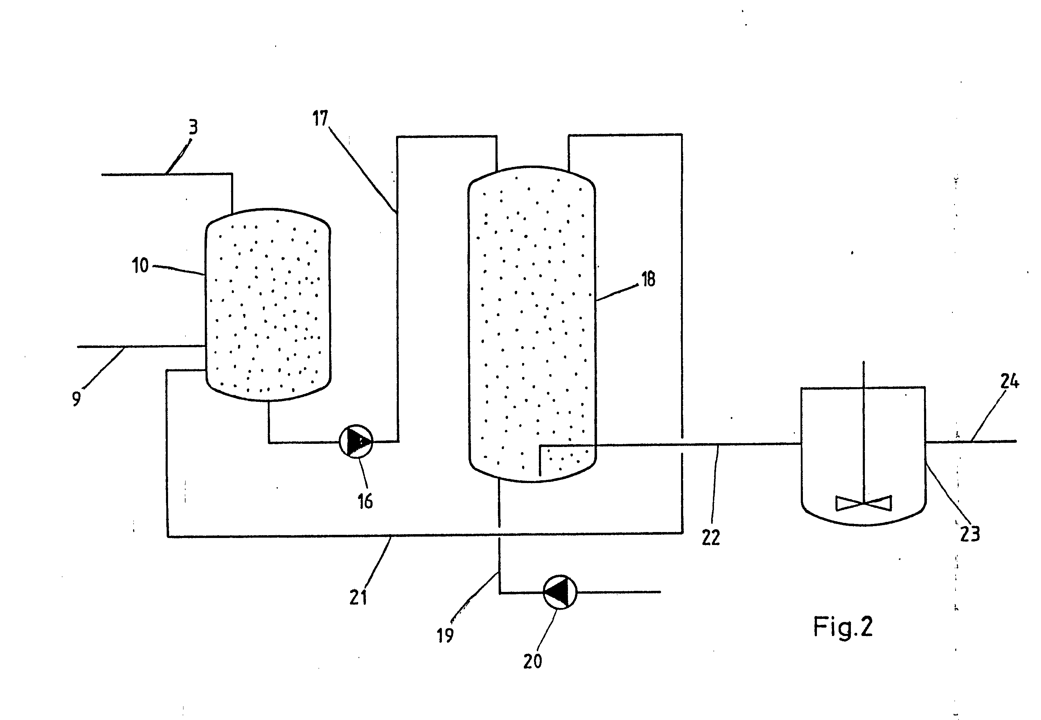

In Fig. 2 fliesst das zu bleichende Abwasser über eine Abwasserleitung 3 in den Bleichturm 10. Hier wird es über die Leitung 9 mit $SO_2$ gesättigt. Die gesättigte Lösung wird vom Boden des Reaktors durch eine Pumpe 16 abgesaugt und über eine Leitung 17 einer weiteren Stripping-Kolonne 18 zugeführt. Durch eine Leitung 19 wird nun mit Hilfe eines Gebläses 20 Luft eingeblasen. Die $SO_2$-gesättigte

Luft verlässt den Kopf der Kolonne über eine Leitung 21 und wird so zum Bleichturm 10 zurückgeführt. Ueber die Leitung 9 wird das verbrauchte $SO_2$ ersetzt. Das gebleichte Abwasser verlässt die Kolonne 18 über eine Leitung 22 und fliesst zur Nachbehandlung in den Rührbehälter 23. Das neutralisierte und gebleichte Abwasser verlässt die Anlage über eine Leitung 24.

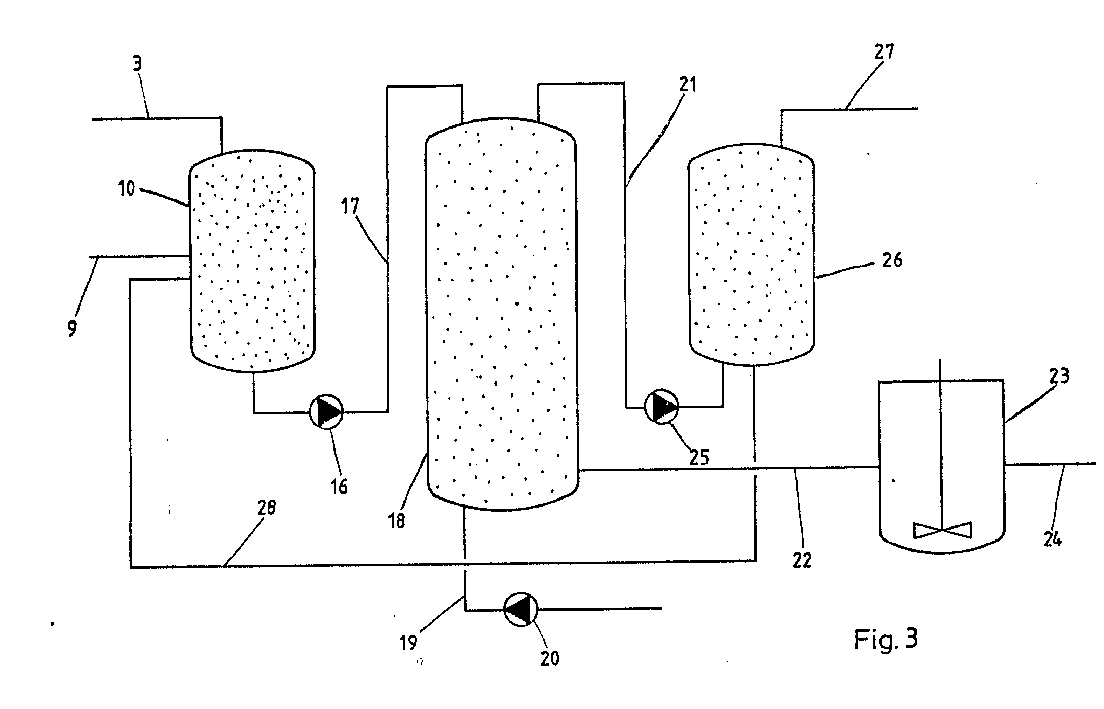

In Fig. 3 wird das aus der Stripping-Kolonne 18 ausgeblasene $SO_2$ über die Leitung 21 mittels einer Pumpe 25 auf einen Absorber 26 geführt, der über eine Leitung 27 mit Wasser beschickt wird. Das in Wasser gelöste $SO_2$ wird durch eine Leitung 28 in flüssiger Form zurück auf den Bleich-Rekator 10 geführt.

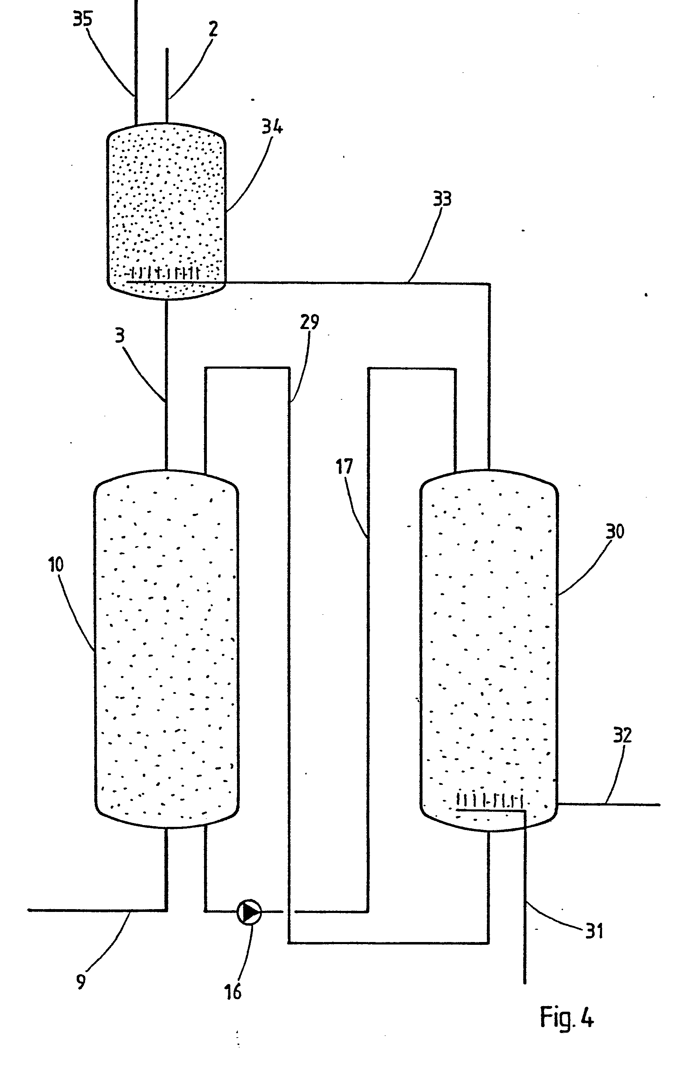

In Fig. 4 wird $SO_2$-haltiges Abgas über die Leitung 9 in den Bleichturm 10 geblasen. Das überschüssige Gas tritt aus dem Kopf des Turmes über eine Leitung 29, mit einem pH-Wert von 2-3, aus und wird im Boden einer Desorptionskolonne 30 eingeführt. In der Kolonne 30 wird das aus dem Bleichturm 10 gebleichte Abwasser im Gegenstrom mit Abgas aus dem Bleichturm 10 und eventuell Luft, welche über eine Leitung 31 eingeführt wird ausgeblasen. Dabei geht der pH-Wert des Abwassers auf 5-7 zurück. Das so neutralisierte Abwasser wird über eine Leitung 32 abgezogen. Die Abluft, die noch Rest-$SO_2$ aus der Desorptionskolonne 30 enthält, wird über eine Leitung 33 in einen Vorabscheider 34 geleitet, der mit Abwasser von pH 8-9,5 über die Leitung 2 beschickt wurde und Reste von $SO_2$ aufnimmt. Die $SO_2$-freien Gase verlassen den Vorabscheider 34 über eine Leitung 35.

Das erfindungsgemässe Verfahren wird anhand eines Beispiels näher beschrieben.

## Beispiel 1

1 m$^3$ anaerob abgebaute Alkoholschlempe aus einer Zuckermelassevergärung, welche dunkelbraun bis schwarz gefärbt ist, und einen chemischen Sauerstoffbedarf (CSB) von 4 - 6000 aufweist, wird mit einer Kalkhydrat (Ca(OH)$_2$)- Aufschlämmung versetzt, bis der pH-Wert 10-12 erreicht ist. Nun wird CO$_2$-Abgas aus einer Verbrennungsanlage durchgeblasen bis der pH-Wert auf 6,5 gefallen ist. Der Kalkrückstand wird abzentrifugiert. Das so behandelte Abwasser weist eine hellgelbe Farbe auf. Wird der Vorgang wiederholt mit einem CO$_2$-Abgas, welches 1 - 2 % SO$_2$-Gas enthält, wird die Farbe noch bis praktisch farblos aufgehellt.

## Beispiel 2

1 Liter biologisch abgebaute Alkoholschlempe wurde mit 40 g Ca(OH)$_2$ versetzt. Es stellte sich pH 12,8 ein. Es wurde CO$_2$ durchgeblasen bis pH 6,3 erreicht war. Das gebildete CaCO$_3$ wurde abfiltriert. Nach der Filtration wies das Abwasser pH 6,9 auf.

Die Entfärbungsergebnisse gehen aus folgender Tabelle hervor:

Zur Messung der Extinktion musste die ursprüngliche Lösung 1 : 10 verdünnt werden. Um vergleichbare Ergebnisse zu erhalten, wurden auch die Proben 1 : 10 verdünnt. Die Messung der Extinktion erfolgte bei 400 nm mit einer Wolframlampe und einer Schichtdicke der Küvetten von 10 mm.

| Probe-Nr. | Abwasser | Extinktion der Lösung 1:10 |
|---|---|---|
| 0 | unbehandelt | 0.840 |
| 1 | mit $CO_2$ behandelt | 0.204 |
| 2 | 2 x mit $CO_2$ behandelt | 0.175 |
| 3 | mit $CO_2$ und $SO_2$ behandelt | 0.119 |
| 4 | Behandlung von 2 zusätzlich mit $SO_2$ | 0.100 |

Die Behandlung mit Kalk und $CO_2$ allein bringt eine vierfache Aufhellung der Farbe. Die zusätzliche Behandlung mit $SO_2$ bringt eine 8-fache Aufhellung des ursprünglichen biologisch abgebauten Abwassers.

Ein weiterer Vorteil für die Technik der Abwassereinigung ist darin zu sehen, dass Abwasser erstens vom giftigen $H_2S$ befreit wird und zweitens das Abwasser entfärbt wird.

Von weiterem Vorteil ist, dass keine fremden Chemikalien wie Eisensalze zur Entfernung von Schwefelwasserstoff erforderlich sind. Für eine Brennerei, die 60 $m^3$ Alkohol pro Tag herstellt, sind bisher 8 to Eisensalze benötigt worden, allein um den Schwefelwasserstoff zu entfernen, ohne eine Entfärbung zu erzielen, sondern durch schwarzes Eisensulfid nur eine Farbvertiefung zu erreichen.

Patentansprüche

1. Verfahren zur Entfärbung von biologisch abgebauten Abwässern, dadurch gekennzeichnet, dass das Abwasser mit gasförmigem Säureanhydrid behandelt wird.

2. Verfahren nach Anspruch 1, dadurch gekennzeichnet, dass das Abwasser zuerst alkalisch gestellt und anschliessend mit einem gasförmigen Säureanhydrid behandelt wird.

3. Verfahren nach den Ansprüchen 1 und 2, dadurch gekennzeichnet, dass als gasförmiges Säureanhydrid Schwefeldioxid ($SO_2$) verwendet wird.

4. Verfahren nach den Ansprüchen 1 und 2, dadurch gekennzeichnet, dass als gasförmiges Säureanhydrid Kohlenstoffdioxid ($CO_2$) verwendet wird.

5. Verfahren nach Anspruch 2, dadurch gekennzeichnet, dass die Alkalischstellung der Abwässer mit Kalkmilch ($Ca(OH)_2$) vorgenommen wird.

6. Verfahren nach Anspruch 1, dadurch gekennzeichnet, dass gasförmige Säureanhydride aus schwefeldioxidhaltigen Rauchgasen verwendet werden.

7. Verfahren nach Anspruch 1, dadurch gekennzeichnet, dass Kohlenstoffdioxid aus Fermenterabgasen verwendet wird.

8. Verfahren nach den Ansprüchen 1 bis 7, dadurch gekennzeichnet, dass das Abwasser mit $SO_2$ gesättigt wird, das überschüssige $SO_2$ mit Luft oder Gas ausgeblasen und rezirkuliert wird.

9. Verfahren nach den Ansprüchen 1 bis 7, dadurch gekennzeichnet, dass das Abwasser mit $SO_2$ gesättigt wird, das überschüssige $SO_2$ ausgeblasen und in Wasser absorbiert dem Prozess zurückgeführt wird.

10. Verfahren nach den Ansprüchen 1 bis 7, dadurch gekennzeichnet, dass das in der Strippingkolonne (18) ausgetriebene Rest-$SO_2$ von frisch zugeführtem Abwasser vollständig absorbiert wird.

11. Verfahren nach den Ansprüchen 1 bis 10, dadurch gekennzeichnet, dass das Abwasser aus einer anaeroben Abbaustufe stammt.

12. Verfahren nach den Ansprüchen 1 bis 10, dadurch gekennzeichnet, dass die Abwässer aus der Fermentationsindustrie stammen.

13. Verfahren nach Anspruch 6, dadurch gekennzeichnet, dass die Rauchgase aus Verbrennungsabgasen einer anaeroben Abbaustufe stammen.

14. Verfahren nach den Ansprüchen 2 und 5, dadurch gekennzeichnet, dass vor der Behandlung mit gasförmigem Säureanhydrid freiwerdendes Ammonika mit Gas ausgetrieben wird.

15. Verfahren nach den Ansprüchen 1 bis 8, dadurch gekennzeichnet, dass zur Verstärkung des Entfärbungseffektes Oxalsäure oder Zitronensäure oder Wasserstoffperoxid zugefügt werden.

Fig. 1

Fig.2

Fig. 3

4/4

Fig. 4

**0047044**

Nummer der Anmeldung

**EUROPÄISCHER RECHERCHENBERICHT**

Europäisches Patentamt

EP 81200958.7

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - A1 - 2 440 815 (DEUTSCHE TON- UND STEINZEUGWERKE AG) <br><br> + Seite 1, Zeilen 1-8; Seite 2, Zeilen 20-31 + <br><br> -- | 1 | C 02 F 3/00 <br> C 02 F 3/28 <br> C 02 F 1/58 |
| A | DE - A - 2 321 742 (HANSSON) <br><br> + Anspruch 1 + <br><br> ---- | 1,3 | |

**RECHERCHIERTE SACHGEBIETE (Int. Cl.³)**

C 02 F
C 05 F

**KATEGORIE DER GENANNTEN DOKUMENTE**

X: von besonderer Bedeutung
A: technologischer Hintergrund
O: nichtschriftliche Offenbarung
P  Zwischenliteratur
T. der Erfindung zugrunde liegende Theorien oder Grundsätze
E. kollidierende Anmeldung
D. in der Anmeldung angeführtes Dokument
L. aus andern Gründen angeführtes Dokument
&: Mitglied der gleichen Patentfamilie. übereinstimmendes Dokument

X  Der vorliegende Recherchenbericht wurde für alle Patentansprüche erstellt.

| Recherchenort | Abschlußdatum der Recherche | Prüfer |
|---|---|---|
| WIEN | 23-11-1981 | WILFLINGER |